# EUROPEAN PATENT SPECIFICATION

(11) **EP 4 382 559 B1**
(45) Date of publication and mention of the grant of the patent: **18.02.2026**
(21) Application number: 23211808.3
(22) Date of filing: 23.11.2023
(51) Int. Cl.: C08J 5/18, C08K 5/09, C08L 1/02, C08L 3/02, C08L 3/12

(54) **BIOACTIVE NANOCOMPOSITE FILM OF THERMOPLASTIC STARCH, BACTERIAL CELLULOSE AND GALLIC ACID AND ITS USES**
BIOAKTIVER NANOKOMPOSITFILM AUS THERMOPLASTISCHER STÄRKE, BAKTERIELLER CELLULOSE UND GALLENSÄURE UND SEINE VERWENDUNG
FILM BIOACTIF NANOCOMPOSITE D'AMIDON THERMOPLASTIQUE, DE CELLULOSE BACTÉRIENNE ET D'ACIDE GALLIQUE ET SES UTILISATIONS

(30) Priority: 06.12.2022 PT 2022118376
(43) Date of publication of application: 12.06.2024
(73) Proprietor: RAIZ - Instituto De Investigação Da Floresta E Papel, 3800-783 Eixo, Aveiro (PT); Universidade de Aveiro, 3810-193 Aveiro (PT)
(72) Inventor: de Oliveira Rodrigues Pinto, Paula Cristina, 3800-783 Eixo (PT); Sena da Costa Branco, Pedro Miguel, 3800-783 Eixo (PT); da Rocha Freire Barros, Carmen Sofia, 3810-193 Aveiro (PT); Domingues Silvestre, Armando Jorge, 3810-193 Aveiro (PT); Domingues de Almeida, Tânia Raquel, 3810-193 Aveiro (PT); Cunha Vilela, Carla Andreia, 3810-193 Aveiro (PT)

(56) References cited:
- CN-A- 114 773 687
- YUJIA ZHAO: "Use of subcritical water technology to develop cassava starch/chitosan/gallic acid bioactive films reinforced with cellulose nanofibers from canola straw", THE JOURNAL OF SUPERCRITICAL FLUIDS, vol. 148, 1 June 2019 (2019-06-01), AMSTERDAM, NL, pages 55 - 65, XP093152492, ISSN: 0896-8446, DOI: 10.1016/j.supflu.2019.02.022
- XIUXIU SUN: "The antimicrobial, mechanical, physical and structural properties of chitosan-gallic acid films", LWT- FOOD SCIENCE AND TECHNOLOGY, vol. 57, no. 1, 1 June 2014 (2014-06-01), United Kingdom, pages 83 - 89, XP093152490, ISSN: 0023-6438, DOI: 10.1016/j.lwt.2013.11.037
- P. CRIADO: "Free radical grafting of gallic acid (GA) on cellulose nanocrystals (CNCS) and evaluation of antioxidant reinforced gellan gum films", RADIATION PHYSICS AND CHEMISTRY, vol. 118, 1 January 2016 (2016-01-01), AMSTERDAM, NL, pages 61 - 69, XP093152491, ISSN: 0969-806X, DOI: 10.1016/j.radphyschem.2015.05.030
- ZHAO YUJIA ET AL: "Development of antimicrobial films based on cassava starch, chitosan and gallic acid using subcritical water technology", THE JOURNAL OF SUPERCRITICAL FLUIDS, ELSEVIER, AMSTERDAM, NL, vol. 137, 17 March 2018 (2018-03-17), pages 101 - 110, XP085376620, ISSN: 0896-8446, DOI: 10.1016/J.SUPFLU.2018.03.010

## Description

### FIELD OF INVENTION

The present invention relates to a bioactive nanocomposite film, for use in active packaging, for application, for example, but not limited to, food products.

In particular, films comprising thermoplastic starch (TPS), bacterial cellulose (CB) and gallic acid (AG).

### BACKGROUND OF THE INVENTION

The importance of plastics for the global economy and our daily lives is unquestionable. Nevertheless, the environmental concerns raised by their massive use and, the finite availability of fossil resources used to produce conventional plastics (Rosenboom et al., 2022), altogether with the environmental awareness of consumers and the pressure of global environmental policies are driving the industrial transition towards more sustainable and environmentally friendly materials (Cavaliere et al., 2020). Food packaging, in particular, is one of the major generators of plastic waste and, consequently, the materials used in this sector are witnessing a great change (Guillard et al., 2018; Porta et al., 2022). In this context, biopolymers, owing to their biodegradability, renewability, and ability to meet most of the requirements of a packaging material (e.g., mechanical, barrier and optical properties), either used alone or blended with reinforcements and/or other additives, have been gaining relevance as a green and viable alternative to fossil-based plastics (Moustafa et al., 2019). In fact, the biopolymers' packaging market is expected to grow at a compound annual growth rate (CAGR) of 12.6% in the forecast period of 2021-2026 (Mordorintelligence, 2021), which evidences the increasing concern of this sector on the exploitation of natural based materials.

Among the multiple available biopolymers, starch is recognized as one of the most promising ones to be applied in the production of packaging materials since it is fully biodegradable, non-toxic, abundantly available, and it has a low cost and ability to be converted into a bioplastic material (Cheng et al., 2021; Jiang et al., 2020). Starch is a hydrocolloid polysaccharide produced by plants and algae, comprising long chains of glucose units linked together by α-1,4 and α-1,6 glycosidic bonds (Cheng et al., 2021; Compart et al., 2021). Starch is composed by two main macromolecular constituents, namely amylose and amylopectin (Cheng et al., 2021). Native starch can be converted into thermoplastic starch (TPS) by applying heat (generally above 60°C) in the presence of adequate amounts of water and plasticizers (e.g., glycerol, sorbitol, or polyethylene glycol) (Bod 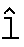 rl 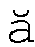 u et al., 2014). These additives enhance the polymer flexibility and processability through disruption of the molecular interactions between starch chains (Khan et al., 2017). Hence, with the possibility of using industrial thermal processing techniques (extrusion, injection moulding, etc.), similar to conventional thermoplastics, TPS is perceived as an attractive candidate to replace the traditional synthetic polymers used in food packaging (García-Guzmán et al., 2022; Lauer & Smith, 2020). However, TPS exhibits some weaknesses, namely poor mechanical properties (low tensile strength) and high sensitivity to moisture that hamper its broader application as a packaging material (Pérez-Pacheco et al., 2016). To overcome some of these limitations, the formulation of TPS-based composites reinforced with cellulosic fibres, whose similarity with the chemical structure of starch, foresees a good compatibility between both biopolymers (Montoya et al., 2014), has gained deal of great interest. Nanocelluloses forms, in particular, have demonstrated to be effective reinforcement agents in improving the mechanical properties of TPS-based films as demonstrated in works with cellulose nanofibers (CNFs) (Fazeli et al., 2018; Park et al., 2019), cellulose nanocrystals (CNCs) (González et al., 2020) or bacterial nanocellulose (BNC) (Martins et al., 2009; Osorio et al., 2014). Additionally, in some cases, the water resistance and thermal stability of TPS-based films were also found to be enhanced by the addition of nanocelluloses (Fazeli et al., 2018; Osorio et al., 2014).

Bacterial nanocellulose is a hydrocolloid nanocellulose substrate produced extracellularly by several non-pathogenic bacteria, from which, the most used strains belong to the genus Komagataeibacter (formerly Gluconoacetobacter) (Torres et al., 2019). Besides its inherent biodegradability and renewable character, BNC also exhibits a set of other properties that turn it very appealing, namely superior mechanical strength, high crystallinity, high thermal stability, and high purity (Cacicedo et al., 2016; Klemm et al., 2011). Another interesting feature of BNC, is the fact that agro-industrial residues can be used, as fermentation medium, for its production (Costa et al., 2017; Gomes et al., 2013; Kumar et al., 2019), which, in one way, contributes to reduce the overall costs and, on the other, meets the principles of circular bioeconomy and sustainable development. Although the combination of TPS and BNC has already been investigated in several studies(Abral et al., 2021; Fabra et al., 2016; Grande et al., 2008; Martins et al., 2009; Montoya et al., 2014, 2019; Orts et al., 2005; Osorio et al., 2014; Santos & Spinacé, 2021; Wan et al., 2009; D. W. Wang et al., 2015), among the works directed to packaging, the research is mostly limited to the improvement of the mechanical behaviour, moisture sensitivity or barrier properties. But, in recent years, there were considerable advances in the packaging technology with the emergence of the concept of active packaging, viz. packages containing active compounds intended to extend or preserve products quality, safety, or shelf-life (Carvalho et al., 2021; Vilela et al., 2018). The food packaging sector has made great investment and progresses in this field (Vasile & Baican, 2021; Yildirim et al., 2018). Therefore, beyond the mechanical and barrier properties, other functionalities, such as antioxidant and antimicrobial activities or UV-barrier properties, are valued in the designing of innovative packaging material.

Additives, like natural phenolic compounds, have received special attention, since they are widely present in plants and are often described as having antioxidant, antimicrobial and UV-barrier properties (Martillanes et al., 2017). Among the multitude of natural phenolic compounds, gallic acid (3,4,5-trihydroxybenzoic acid, AG) is a low-cost compound, described as a powerful antioxidant with antimicrobial properties (Badhani et al., 2015), which is present, for example, in *Pinus pinaster* bark (Ferreira-Santos et al., 2019), *Suaeda glauca Bge* leaves (X. H. Wang et al., 2016), black tea (Verduin, 2020) or in pineapple-industry wastes (Sepúlveda et al., 2018), and thus, is an interesting candidate to be explored as active agent. In the field of food packaging, AG has been incorporated in gelatina films (Limpisophon & Schleining, 2017; Luo et al., 2021), chitosan (Zarandona et al., 2020) and starch produced from potato by-products (Zhao & Saldaña, 2019). In this one, results showed that AG has provided starch films with antioxidant properties (Zhao & Saldaña, 2019). Another work found that the incorporation of AG-based ionic liquid into BNC membranes resulted in membranes with antioxidant and anti-inflammatory activities, but in this case for healthcare purposes (Morais et al., 2019).

Patent application US20220119667A1 discloses a composition comprising at least one cellulose-based material and, optionally, an inorganic salt. The patent application further describes that the composition may further comprise surfactants, plasticizers and antimicrobial compounds. The compositions disclosed are useful for forming edible coatings/films for plants, plant parts and other objects. Films incorporating the composition described can be used to protect against moisture loss, gas transmission, microbial growth and UV radiation damage in fresh fruit and vegetables.

Patent application WO2018144482A1 describes a coating formulation comprising a cellulose nanomaterial such as cellulose nanocrystals or nanofibrils and an emulsion system comprising a hydrophobic agent (such as a fatty acid) and a surfactant. The formulation makes it possible to control the physiological activity of packaged products and increase the shelf life at room temperature of food products such as fruit.

There is therefore a need to develop thermoplastic starch-based films that surpass the properties of existing ones, and which also have differentiating and advantageous features for their application as a constituent material of sustainable and environmentally friendly active packaging, namely antioxidant and antimicrobial activities.

### References

Abdullah, A. H. D., Chalimah, S., Primadona, I., & Hanantyo, M. H. G. (2018). Physical and chemical properties of corn, cassava, and potato starchs. *IOP Conference Series: Earth and Environmental Science, 160(1),* 012003. https://doi.org/10.1088/1755-1315/160/1/012003
Abral, H., Pratama, A. B., Handayani, D., Mahardika, M., Aminah, I., Sandrawati, N., Sugiarti, E., Muslimin, A. N., Sapuan, S. M., & Ilyas, R. A. (2021). Antimicrobial edible film prepared from bacterial cellulose nanofibers/starch/chitosan for a food packaging alternative. International Journal of Polymer Science, 2021, 6641284. https://doi.org/10.1155/2021/6641284
Aragón-Gutiérrez, A., Rosa, E., Gallur, M., López, D., Hernández-Muñoz, P., & Gavara, R. (2021). Melt-processed bioactive evoh films incorporated with ferulic acid. Polymers, 13(1), 1-18. https://doi.org/10.3390/polym13010068
Badhani, B., Sharma, N., & Kakkar, R. (2015). Gallic acid: A versatile antioxidant with promising therapeutic and industrial applications. RSC Advances, 5(35), 27540-27557. https://doi.org/10.1039/c5ra01911g
Bartolomeu, M., Rocha, S., Cunha, Â., Neves, M. G. P. M. S., Faustino, M. A. F., & Almeida, A. (2016). Effect of photodynamic therapy on the virulence factors of Staphylococcus aureus. Frontiers in Microbiology, 7, 267. https://doi.org/10.3389/fmicb.2016.00267
Bod 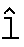 rl 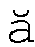 u, R., Teac 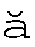 , C.-A., & Spiridon, I. (2014). Starch-cellulose composites. BioResources, 9(1), 39-53.
Borges, A., Ferreira, C., Saavedra, M. J., & Simões, M. (2013). Antibacterial activity and mode of action of ferulic and gallic acids against pathogenic bacteria. Microbial Drug Resistance, 19(4), 256-265. https://doi.org/10.1089/mdr.2012.0244
Cacicedo, M. L., Castro, M. C., Servetas, I., Bosnea, L., Boura, K., Tsafrakidou, P., Dima, A., Terpou, A., Koutinas, A., & Castro, G. R. (2016). Progress in bacterial cellulose matrices for biotechnological applications. Bioresour Technol , 213, 172-180. https://doi.org/10.1016/j.biortech.2016.02.071
Carvalho, J., Freire, C. S. R., & Vilela, C. (2021). Active Packaging (Chapter 9). In C. M. Galanakis (Ed.), Sustainable food packaging and engineering challenges, Academic Press (1st ed., pp. 315-334).
Cavaliere, A., Pigliafreddo, S., de Marchi, E., & Banterle, A. (2020). Do consumers really want to reduce plastic usage? Exploring the determinants of plastic avoidance in food-related consumption decisions. Sustainability (Switzerland), 12(22), 1-15. https://doi.org/10.3390/su12229627
Chen, N., Gao, H. X., He, Q., Yu, Z. L., & Zeng, W. C. (2020). Interaction and action mechanism of starch with different phenolic compounds. International Journal of Food Sciences and Nutrition, 71(6), 726-737. https://doi.org/10.1080/09637486.2020.1722074
Cheng, H., Chen, L., McClements, D. J., Yang, T., Zhang, Z., Ren, F., Miao, M., Tian, Y., & Jin, Z. (2021). Starch-based biodegradable packaging materials: A review of their preparation, characterization and diverse applications in the food industry. Trends in Food Science and Technology, 114, 70-82. https://doi.org/10.1016/j.tifs.2021.05.017
Chiozzi, V., Agriopoulou, S., & Varzakas, T. (2022). Advances, Applications, and Comparison of Thermal (Pasteurization, Sterilization, and Aseptic Packaging) against Non-Thermal (Ultrasounds, UV Radiation, Ozonation, High Hydrostatic Pressure) Technologies in Food Processing. Applied Sciences (Switzerland), 12(4), 2202. https://doi.org/10.3390/app12042202
Compart, J., Li, X., & Fettke, J. (2021). Starch-A complex and undeciphered biopolymer. Journal of Plant Physiology, 258-259, 153389. https://doi.org/10.1016/j.jplph.2021.153389
Costa, A. F. S., Almeida, F. C. G., Vinhas, G. M., & Sarubbo, L. A. (2017). Production of bacterial cellulose by Gluconacetobacter hansenii using corn steep liquor as nutrient sources. Front Microbiol , 8, 2027. https://doi.org/10.3389/fmicb.2017.02027
Fabra, J. M., López-Rubio, A., & Ambrosio-Martin, J. (2016). Improving the Barrier Properties of Thermoplastic Corn Starch-based Films Containing Bacterial Cellulose Nanowhiskers by Means of PHA Electrospun 2 Coatings of Interest in Food Packaging. Food Hydrocolloids, 61, 261-268.
Fazeli, M., Keley, M., & Biazar, E. (2018). Preparation and characterization of starch-based composite films reinforced by cellulose nanofibers. International Journal of Biological Macromolecules, 116, 272-280. https://doi.org/10.1016/j.ijbiomac.2018.04.186
Ferreira-Santos, P., Genisheva, Z., Pereira, R. N., Teixeira, J. A., & Rocha, C. M. R. (2019). Moderate Electric Fields as a Potential Tool for Sustainable Recovery of Phenolic Compounds from Pinus pinaster Bark. ACS Sustainable Chemistry and Engineering, 7(9), 8816-8826. https://doi.org/10.1021/acssuschemeng.9b00780
García-Guzmán, L., Cabrera-Barjas, G., Soria-Hernández, C. G., Castaño, J., Guadarrama-Lezama, A. Y., & Rodriguez Llamazares, S. (2022). Progress in Starch-Based Materials for Food Packaging Applications. Polysaccharides, 3(1), 136-177. https://doi.org/10.3390/polysaccharides3010007
Gomes, F. P., Silva, N. H. C. S., Trovatti, E., Serafim, L. S., Duarte, M. F., Silvestre, A. J. D., Neto, C. P., & Freire, C. S. R. (2013). Production of bacterial cellulose by Gluconacetobacter sacchari using dry olive mill residue. Biomass Bioenergy, 55, 205-211. https://doi.org/10.1016/j.biombioe.2013.02.004
González, K., Iturriaga, L., González, A., Eceiza, A., & Gabilondo, N. (2020). Improving mechanical and barrier properties of thermoplastic starch and polysaccharide nanocrystals nanocomposites. European Polymer Journal, 123, 109415. https://doi.org/10.1016/j.eurpolymj.2019.109415
Grande, C., Torres, F., Gomez, C., Troncoso, O., Cane-Ferrer, J., & Martinez-Pastor, J. (2008). Morphological Characterisation of Bacterial Cellulose-Starch Nanocomposites. Polym Polym Compos, 16(3), 181-185.
Guillard, V., Gaucel, S., Fornaciari, C., Angellier-Coussy, H., Buche, P., & Gontard, N. (2018). The Next Generation of Sustainable Food Packaging to Preserve Our Environment in a Circular Economy Context. Frontiers in Nutrition, 5, 121. https://doi.org/10.3389/fnut.2018.00121
Hu, G., Chen, J., & Gao, J. (2009). Preparation and characteristics of oxidized potato starch films. Carbohydrate Polymers, 76(2), 291-298. https://doi.org/10.1016/j.carbpol.2008.10.032
Jana, R. N., Mukunda, P. G., & Nando, G. B. (2003). Thermogravimetric analysis of compatibilized blends of low density polyethylene and poly(dimethyl siloxane) rubber. Polymer Degradation and Stability, 80(1), 75-82. https://doi.org/10.1016/s0141-3910(02)00385-3
Jiang, T., Duan, Q., Zhu, J., Liu, H., & Yu, L. (2020). Starch-based biodegradable materials: Challenges and opportunities. Advanced Industrial and Engineering Polymer Research, 3(1), 8-18. https://doi.org/10.1016/j.aiepr.2019.11.003
Jildeh, Z. B., Wagner, P. H., & Schöning, M. J. (2021). Sterilization of Objects, Products, and Packaging Surfaces and Their Characterization in Different Fields of Industry: The Status in 2020. Physica Status Solidi (A) Applications and Materials Science, 218(13), 2000732. https://doi.org/10.1002/pssa.202000732
Khan, B., Bilal Khan Niazi, M., Samin, G., & Jahan, Z. (2017). Thermoplastic Starch: A Possible Biodegradable Food Packaging Material-A Review. Journal of Food Process Engineering, 40(3), e12447. https://doi.org/10.1111/jfpe.12447
Klemm, D., Kramer, F., Moritz, S., Lindström, T., Ankerfors, M., Gray, D., & Dorris, A. (2011). Nanocelluloses: A new family of nature-based materials. Angew Chem Int Ed Engl , 50(24), 5438-5466. https://doi.org/10.1002/anie.201001273
Kumar, V., Sharma, D. K., Bansal, V., Mehta, D., Sangwan, R. S., & Yadav, S. K. (2019). Efficient and economic process for the production of bacterial cellulose from isolated strain of Acetobacter pasteurianus of RSV-4 bacterium. Bioresour Technol , 275, 430-433. https://doi.org/10.1016/j.biortech.2018.12.042
Lauer, M. K., & Smith, R. C. (2020). Recent advances in starch-based films toward food packaging applications: Physicochemical, mechanical, and functional properties. Comprehensive Reviews in Food Science and Food Safety, 19(6), 3031-3083. https://doi.org/10.1111/1541-4337.12627
Limpisophon, K., & Schleining, G. (2017). Use of Gallic Acid to Enhance the Antioxidant and Mechanical Properties of Active Fish Gelatin Film. Journal of Food Science, 82(1), 80-89. https://doi.org/10.1111/1750-3841.13578
Luo, Y., Wu, Y., Wang, Y., & Yu, L. (2021). Active and robust composite films based on gelatin and gallic acid integrated with microfibrillated cellulose. Foods, 10(11), 2831. https://doi.org/10.3390/foods10112831
Luzi, F., Torre, L., Kenny, J. M., & Puglia, D. (2019). Bio- and fossil-based polymeric blends and nanocomposites for packaging: Structure-property relationship. Materials, 12(3), 471. https://doi.org/10.3390/ma12030471
Maes, C., Luyten, W., Herremans, G., Peeters, R., Carleer, R., & Buntinx, M. (2018). Recent Updates on the Barrier Properties of Ethylene Vinyl Alcohol Copolymer (EVOH): A Review. Polymer Reviews, 58(2), 209-246. https://doi.org/10.1080/15583724.2017.1394323
Mangaraj, S., Goswami, T. K., & Mahajan, P. v. (2009). Applications of Plastic Films for Modified Atmosphere Packaging of Fruits and Vegetables: A Review. Food Engineering Reviews, 1(2), 133-158. https://doi.org/10.1007/s12393-009-9007-3
Mangmee, K., & Homthawornchoo, W. (2016). Antioxidant activity and physicochemical properties of rice starch-chitosan-based films containing green tea extract. Food and Applied Bioscience Journal, 4(3), 126-137.
Martillanes, S., Rocha-Pimienta, J., Cabrera-Bañegil, M., Martin-Vertedor, D., & Delgado-Adámez, J. (2017). Application of Phenolic Compounds for Food Preservation: Food Additive and Active Packaging. In Phenolic Compounds - Biological Activity (pp. 39-58). InTech. https://doi.org/10.5772/66885
Martins, I. M. G., Magina, S. P., Oliveira, L., Freire, C. S. R., Silvestre, A. J. D., Neto, C. P., & Gandini, A. (2009). New biocomposites based on thermoplastic starch and bacterial cellulose. Composites Science and Technology, 69(13), 2163-2168. https://doi.org/10.1016/j.compscitech.2009.05.012
Menzel, C., González-Martínez, C., Chiralt, A., & Vilaplana, F. (2019). Antioxidant starch films containing sunflower hull extracts. Carbohydrate Polymers, 214, 142-151. https://doi.org/10.1016/j.carbpol.2019.03.022
Michiels, Y., van Puyvelde, P., & Sels, B. (2017). Barriers and chemistry in a bottle: Mechanisms in today's oxygen barriers for tomorrow's materials. Applied Sciences (Switzerland), 7(7), 665. https://doi.org/10.3390/app7070665
Montoya, Ú., Zuluaga, R., Castro, C., Goyanes, S., & Gañán, P. (2014). Development of composite films based on thermoplastic starch and cellulose microfibrils from Colombian agroindustrial wastes. Journal of Thermoplastic Composite Materials, 27(3), 413-426. https://doi.org/10.1177/0892705712461663
Montoya, Ú., Zuluaga, R., Castro, C., Vélez, L., & Gañán, P. (2019). Starch and Starch/Bacterial Nanocellulose Films as Alternatives for the Management of Minimally Processed Mangoes. Starch/Staerke, 71(5-6), 1800120. https://doi.org/10.1002/star.201800120
Morais, E. S., Silva, N. H. C. S., Sintra, T. E., Santos, S. A. O., Neves, B. M., Almeida, I. F., Costa, P. C., Correia-Sá, I., Ventura, S. P. M., Silvestre, A. J. D., Freire, M. G., & Freire, C. S. R. (2019). Anti-inflammatory and antioxidant nanostructured cellulose membranes loaded with phenolic-based ionic liquids for cutaneous application. Carbohydr Polym , 206, 187-197. https://doi.org/10.1016/j.carbpol.2018.10.051
Mordorintelligence. (2021). Biopolymer Packaging Market - Growth, Trends, COVID-19 Impact, and Forecasts (2021 - 2026). https://www.mordorintelligence.com/industry-reports/biopolymer-packaging-market. Acedido a 5 de setembro de 2022.
Moreirinha, C., Vilela, C., Silva, N. H. C. S., Pinto, R. J. B., Almeida, A., Rocha, M. A. M., Coelho, E., Coimbra, M. A., Silvestre, A. J. D., & Freire, C. S. R. (2020). Antioxidant and antimicrobial films based on brewers spent grain arabinoxylans, nanocellulose and feruloylated compounds for active packaging. Food Hydrocolloids, 108, 105836. https://doi.org/10.1016/j.foodhyd.2020.105836
Moustafa, H., Youssef, A. M., Darwish, N. A., & Abou-Kandil, A. I. (2019). Eco-friendly polymer composites for green packaging: Future vision and challenges. Composites Part B: Engineering, 172, 16-25. https://doi.org/10.1016/j.compositesb.2019.05.048
Nguyen Vu, H. P., & Lumdubwong, N. (2016). Starch behaviors and mechanical properties of starch blend films with different plasticizers. Carbohydrate Polymers, 154, 112-120. https://doi.org/10.1016/j.carbpol.2016.08.034
Nunes, S. B., Hodel, K. V. S., Sacramento, G. da C., da Silva Melo, P., Pessoa, F. L. P., Barbosa, J. D. V., Badaró, R., & Machado, B. A. S. (2021). Development of bacterial cellulose biocomposites combined with starch and collagen and evaluation of their properties. Materials, 14(2), 1-21. https://doi.org/10.3390/ma14020458
Orts, W. J., Shey, J., Imam, S. H., Glenn, G. M., Guttman, M. E., & Revol, J. F. (2005). Application of cellulose microfibrils in polymer nanocomposites. Journal of Polymers and the Environment, 13(4), 301-306. https://doi.org/10.1007/s10924-005-5514-3
Osorio, M. A., Restrepo, D., Velásquez-Cock, J. A., Zuluaga, R. O., Montoya, U., Rojas, O., Gañán, P. F., Marin, D., & Castro, C. I. (2014). Synthesis of thermoplastic starch-bacterial cellulose nanocomposites via in situ fermentation. Journal of the Brazilian Chemical Society, 25(9), 1607-1613. https://doi.org/10.5935/0103-5053.20140146
Pankey, G. A., & Sabath, L. D. (2004). Clinical Relevance of Bacteriostatic versus Bactericidal Mechanisms of Action in the Treatment of Gram-Positive Bacterial Infections. Clinical Infectious Diseases, 38, 864-870. https://academic.oup.com/cid/article/38/6/864/320723
Park, C.-W., Han, S.-Y., Seo, P.-N., Youe, J., Kim, Y. S., Choi, S.-K., Kim, N.-H., & Lee, S.-H. (2019). CNF in thermoplastic starch. BioResources, 14(1), 1564-1578.
Pérez-Pacheco, E., Canto-Pinto, J. C., Moo-Huchin, V. M., Estrada-Mota, I. A., Estrada-León, R. J., & Chel-Guerrero, L. (2016). Thermoplastic Starch (TPS)-Cellulosic Fibers Composites: Mechanical Properties and Water Vapor Barrier: A Review. In Composites from Renewable and Sustainable Materials (pp. 85-105). InTech. https://doi.org/10.5772/65397
Porta, R., Sabbah, M., & di Pierro, P. (2022). Bio-Based Materials for Packaging. International Journal of Molecular Sciences, 23(7), 3611. https://doi.org/10.3390/ijms23073611
Rodrigues, F. A. M., dos Santos, S. B. F., Lopes, M. M. de A., Guimarães, D. J. S., de Oliveira Silva, E., de Souza Filho, M. de S. M., Mattos, A. L. A., da Silva, L. M. R., de Azeredo, H. M. C., & Ricardo, N. M. P. S. (2021). Antioxidant films and coatings based on starch and phenolics from Spondias purpurea L. International Journal of Biological Macromolecules, 182, 354-365. https://doi.org/10.1016/j.ijbiomac.2021.04.012
Rosenboom, J. G., Langer, R., & Traverso, G. (2022). Bioplastics for a circular economy. Nature Reviews Materials, 7(2), 117-137. https://doi.org/10.1038/s41578-021-00407-8
Santos, T. A., & Spinacé, M. A. S. (2021). Sandwich panel biocomposite of thermoplastic corn starch and bacterial cellulose. International Journal of Biological Macromolecules, 167, 358-368. https://doi.org/10.1016/j.ijbiomac.2020.11.156
Sepúlveda, L., Romani, A., Aguilar, C. N., & Teixeira, J. (2018). Valorization of pineapple waste for the extraction of bioactive compounds and glycosides using autohydrolysis. Innovative Food Science and Emerging Technologies, 47, 38-45. https://doi.org/10.1016/j.ifset.2018.01.012
Shiku, Y., Yuca, P., And, H., & Tanaka, M. (2003). Effect of pH on the preparation of edible films based on fish myofibrillar proteins. FISHERIES SCIENCE, 69, 1026-1032. https://doi.org/10.1046/j.0919-9268.2003.00722.x
Torres, F. G., Arroyo, J. J., & Troncoso, O. P. (2019). Bacterial cellulose nanocomposites: An all-nano type of material. Materials Science and Engineering C, 98, 1277-1293. https://doi.org/10.1016/j.msec.2019.01.064
Vasile, C., & Baican, M. (2021). Progresses in food packaging, food quality, and safetyzcontrolled-release antioxidant and/or antimicrobial packaging. Molecules, 26(5), 1263. https://doi.org/10.3390/molecules26051263
Verduin, J. (2020). Photodegradation Products And Their Analysis In Food. Food Science and Nutrition, 6(3), 1-16. https://doi.org/10.24966/FSN-1076/100067
Vilela, C., Kurek, M., Hayouka, Z., Röcker, B., Yildirim, S., Antunes, M. D. C., Nilsen-Nygaard, J., Pettersen, M. K., & Freire, C. S. R. (2018). A concise guide to active agents for active food packaging. Trends in Food Science and Technology, 80, 212-222. https://doi.org/10.1016/j.tifs.2018.08.006
Wan, Y. Z., Luo, H., He, F., Liang, H., Huang, Y., & Li, X. L. (2009). Mechanical, moisture absorption, and biodegradation behaviours of bacterial cellulose fibre-reinforced starch biocomposites. Composites Science and Technology, 69(7-8), 1212-1217. https://doi.org/10.1016/j.compscitech.2009.02.024
Wang, D. W., Xu, Y. J., Li, X., Huang, C. M., Huang, K. S., Wang, C. K., & Yeh, J. T. (2015). Mechanical retention and waterproof properties of bacterial cellulose-reinforced thermoplastic starch biocomposites modified with sodium hexametaphosphate. Materials, 8(6), 3168-3194. https://doi.org/10.3390/ma8063168
Wang, X. H., Cai, C., & Li, X. M. (2016). Optimal Extraction of Gallic Acid from Suaeda glauca Bge. Leaves and Enhanced Efficiency by Ionic Liquids. International Journal of Chemical Engineering, 2016, 5217802. https://doi.org/10.1155/2016/5217802
Wongprayoon, S., Tran, T., Gibert, O., Dubreucq, E., Piyachomkwan, K., & Sriroth, K. (2018). Characterization of Crystalline Structure and Thermostability of Debranched Chickpea Starch-lauric Acid Complexes Prepared Under Different Complexation Conditions. Chiang Mai J. Sci, 45, 1-15. http://epg.science.cmu.ac.th/ejournal/
Yildirim, S., Röcker, B., Pettersen, M. K., Nilsen-Nygaard, J., Ayhan, Z., Rutkaite, R., Radusin, T., Suminska, P., Marcos, B., & Coma, V. (2018). Active Packaging Applications for Food. Comprehensive Reviews in Food Science and Food Safety, 17(1), 165-199. https://doi.org/10.1111/1541-4337.12322
Zarandona, I., Puertas, A. I., Dueñas, M. T., Guerrero, P., & de la Caba, K. (2020). Assessment of active chitosan films incorporated with gallic acid. Food Hydrocolloids, 101, 105486. https://doi.org/10.1016/j.foodhyd.2019.105486
Zhao, Y., & Saldaña, M. D. A. (2019). Use of potato by-products and gallic acid for development of bioactive film packaging by subcritical water technology. Journal of Supercritical Fluids, 143, 97-106. https://doi.org/10.1016/j.supflu.2018.07.025.

### SUMMARY OF THE INVENTION

The present invention relates to a bioactive nanocomposite film comprising thermoplastic starch, 1% to 20% by weight of bacterial cellulose in relation to the weight of the starch and 0.25 to 5% by weight of gallic acid in relation to the weight of the starch, wherein at least one of the components has nanometric dimensions of < 100 nm.

According to one embodiment of the present invention, the bioactive nanocomposite film comprises thermoplastic starch, 1% to 10% by weight of bacterial cellulose in relation to the weight of the starch and 1 to 1.5% by weight of gallic acid in relation to the weight of the starch.

According to one embodiment of the present invention, the bioactive nanocomposite film comprises thermoplastic starch, 10% by weight of bacterial cellulose in relation to the weight of the starch and 1% by weight of gallic acid in relation to the weight of the starch.

According to one embodiment of the present invention, the bioactive nanocomposite film comprises thermoplastic starch, 10% by weight of bacterial cellulose in relation to the weight of the starch and 1.5% by weight of gallic acid in relation to the weight of the starch.

Another aspect of the present invention is the use of the bioactive nanocomposite film in the production of packaging.

According to one embodiment of the present invention, the bioactive nanocomposite film is used in the production of food packaging.

Another aspect of the present invention is a packaging comprising the bioactive nanocomposite film.

### BRIEF DESCRIPTION OF THE INVENTION

Figure 1. Visual appearance of TPS, TPS-CB and TPS-CB-AG films placed on a plant leaf to evidence their transparency.
Figure 2. ATR-FTIR spectra of (A) the individual components (starch, glycerol (G), gallic acid (AG), disintegrated bacterial cellulose (CB) and thermoplastic starch (TPS) and (B) the TPS, TPS-CB and TPS-CB-AG films.
Figure 3. X-ray diffractograms of TPS, TPS-CB and TPS-CB-AG films.
Figure 4. SEM micrographs of the surface of TPS, TPS-CB and TPS-CB-AG films.
Figure 5. (A) Thermograms and (B) the respective derivatives of TPS, TPS-CB and TPS-CB-AG films heated from room temperature to 800 °C (10 °C min⁻¹) under an inert atmosphere (N₂).
Figure 6. Mechanical properties of TPS, TPS-CB and TPS-CB-AG films: (A) Young's modulus, (B) maximum tensile strength and (C) elongation at break. The values are the average of 5 replicates and the error bars correspond to the standard deviation. Averages with different letters indicate significant differences (p < 0.05); (D) Photograph showing the flexibility of the films produced.
Figure 7. Moisture absorption by TPS, TPS-CB and TPS-CB-AG films over time (up to 72 h) when kept at room temperature and an RH of ca. 75%. The values are the average of 3 replicates and the error bars correspond to the standard deviation. The symbol * indicates significant differences (p < 0.05), compared to TPS, for the same point of analysis.
Figure 8. (A) Water solubility of TPS, TPS-CB and TPS-CB-AG films after 24 h of immersion in water. The results are the average of 5 replicates and the error bars correspond to the standard deviation. Averages with different letters indicate significant differences (p < 0.05); (B) Visual appearance of TPS, TPS-CB5-AG1, TPS-CB5-AG1.5, TPS-CB10-AG1 and TPS-CB10-AG1.5 films immediately after immersion in distilled water (T0) and after 24 h (T24) at room temperature.
Figure 9. (A) UV-vis transmission spectra of TPS, TPS-CB and TPS-CB-AG films acquired between wavelengths 200 nm and 800 nm; (B) opacity values of the films produced. The results are the average of 3 replicates and the error bars correspond to the standard deviation. Averages with different letters indicate significant differences (p < 0.05).
Figure 10. Antioxidant activity of TPS, TPS-CB and TPS-CB-AG films assessed by the DPPH* free radical scavenging method in ethanol/water (50:50). The results are expressed as the mean of 3 replicates and the error bars correspond to the standard deviation.
Figure 11. Antibacterial activity of TPS, TPS-CB10 and TPS-CB10-AG1 films against *S. aureus* strain DSM 25693 MRSA. The log CFU mL⁻¹ was determined after 24 and 48 h of incubation of the bacteria (in PBS) with samples (3 cm²) of each film. The results are expressed as the mean of 3 independent tests carried out in duplicate and the error bars correspond to the standard deviation. Averages with different letters indicate significant differences (p < 0.05).

### DETAILED DESCRIPTION OF THE INVENTION

The present invention relates to an innovative film that combines two hydrocolloid biopolymers, i.e. high molecular weight hydrophilic molecules, more particularly thermoplastic starch and bacterial cellulose, with gallic acid to obtain a transparent, thermally stable film with increased/improved characteristics, namely mechanical properties, water resistance and oxygen permeability, UV radiation barrier properties and antioxidant and antibacterial activities, which allow its application to be extended to active packaging, for example, but not limited to, food products. They also have the added value of being biodegradable, sustainable and environmentally friendly films.

In the context of the present invention, active packaging is packaging that incorporates active compounds with the intention of preserving the quality, safety and/or shelf life of the packaged products.

In the context of the present invention, a biopolymer refers to a polymeric compound derived from a natural resource or produced by a biological system, such as polysaccharides, for example but not limited to starch and bacterial cellulose.

In the context of the present invention, thermoplastic starch (TPS) refers to a thermoplastic material obtained by destructuring the granular organization of native starch when it is processed with a high-water content at high temperatures (e.g. 95 °C) or by the action of shear forces and temperature in the presence of plasticizers, such as, but not limited to glycerol, sorbitol or polyethylene glycol.

In the context of the present invention, nanocomposite refers to a hybrid material, composed of multiple components to obtain a material with superior properties, in which at least one of the components has nanometric dimensions (<100 nm) .

In the context of the present invention, a bioactive film refers to a biopolymer-based film with antioxidant and antibacterial properties.

The present invention thus relates to bioactive thermoplastic starch films, reinforced with bacterial cellulose and enriched with gallic acid.

The following are non-limiting and non-restrictive examples of the realization of the present invention, including any obvious modification and equivalent to that here described.

Thermoplastic starch (TPS) films reinforced with CB (1%, 5%, 10% and 20% w/w, relative to the weight of the starch) and enriched with AG (0.25%, 1, 1.5% and 5% w/w, relative to the weight of the starch) were prepared using the solvent evaporation method.

In terms of mechanical properties, TPS films reinforced with CB and enriched with AG showed an increase in strength (Young's modulus and maximum tensile strength). However, the films remain flexible and manageable. The presence of CB and AG in the TPS matrix also increased the films' resistance to both ambient moisture absorption and water solubility, which are properties that often limit the application of starch as a packaging material. In addition, the resulting films are visually transparent and have a transmittance in the visible region close to 80% and opacity values (2.24 - 4.69 A600 mm⁻¹) comparable to polyethylene films (3.05 A600 mm⁻¹). The films also have UV barrier properties and antioxidant activity (> 80%), characteristics that are highly valued by the packaging sector.

The film with 10% w/w CB and 1% w/w AG (TPS-CB10-AG1) was selected for further characterization in terms of oxygen barrier properties and antibacterial activity, showing that this formulation results in a film with good oxygen barrier properties (0.91 cm³µm m⁻² d⁻¹ kPa⁻¹), comparable to that of ethylene-vinyl alcohol copolymer (EVOH), which is widely applied in flexible packaging (Maes et al., 2018). In addition, the results also showed that the AG gave the film antibacterial activity against the Gram-positive bacterium *Staphylococcus aureus.*

### Materials

*Native starch (*CAS No. 9005-48-9*) (≥95%):* commercial starch (S9765, Sigma-Aldrich), extracted from potatoes and made up of 80% amylopectin and 20% amylose.

*Disintegrated bacterial cellulose (BC):* BC was produced in static culture using the acetic bacterium Gluconacetobacter sacchari in a culture medium rich in sugars (glucose) and with nitrogen sources (yeast extract and peptone) for 4-7 days. After being collected from the culture medium, the membranes were treated twice with an aqueous solution of 0.5 M NaOH at 80 °C for 30 min and then washed with distilled water, treated with 1% (v/v) sodium hypochlorite and washed again with distilled water to neutral pH. The membranes were then disintegrated in the MiniBatch D-9 homogenizer (MICCRA GmbH) for 25 min at 16,000 rpm to obtain a disintegrated form of CB. The cellulose content of each batch was determined by the dry weight of 4 replicates of wet samples, dried at 105 °C until a constant weight was reached.

*Glycerol (G) (CAS No. 56-81-5)* (purity level ≥ 99.5%): compound with plasticizing properties.

*Gallic acid (AG)* (CAS No. 149-91-7) (purity ≥97.5%): active phenolic compound with antioxidant and antimicrobial properties.

### Process

The TPS films, reinforced with CB and enriched with AG, were prepared in the following steps:
(1) The native starch was gelatinized in water (2%, w/v) at 95 °C for 30 min with stirring (500 rpm);
(2) The AG was dissolved in water (1.1%, w/v), with agitation, at room temperature;
(3) After gelatinization, the starch solution was left to cool until it reached around 40-50 °C, after which glycerol was added (20% w/w, relative to the weight of starch). CB and the AG solution were then added in the proportions shown in Table 1. The mixtures were then stirred (800 rpm) for 1 hour to homogenize and, if necessary, degassed at the end;
(4) The mixtures were poured into molds (Petri dishes or acrylic plates) which were then placed in an oven at 35 °C for approximately 20 hours to allow the solvent (water) to evaporate completely;
(5) After the solvent had completely evaporated, the films were removed from the molds and stored protected from light, at room temperature and relative humidity (RH) ≈ 30%.

Table 1 shows the films produced, with their respective glycerol, CB and AG content. The thickness of each film after evaporation of the solvent is also shown.

**Table 1. Identification of the films prepared with their composition in CB and AG. The thicknesses of the films are also shown.**

| Film | CB (%)^{a} | Gallic acid (%)^{a} | Thickness (µm) |
|---|---|---|---|
| TPS | - | - | 28 ± 2 |
| TPS-CB1 | 1 | - | 33 ± 3 |
| TPS-CB1-AG1 | 1 | 1 | 33 ± 3 |
| TPS-CB1-AG1.5 | 1 | 1,5 | 33 ± 2 |
| TPS-CB5 | 5 | - | 33 ± 2 |
| TPS-CB5-AG1 | 5 | 1 | 34 ± 2 |
| TPS-CB5-AG1.5 | 5 | 1,5 | 36 ± 2 |
| TPS-CB10 | 10 | - | 35 ± 2 |
| TPS-CB10-AG1 | 10 | 1 | 35 ± 1 |
| TPS-CB10-AG1.5 | 10 | 1,5 | 36 ± 1 |

| | | | |
|---|---|---|---|
| ^{a} w/w relative to starch | | | |

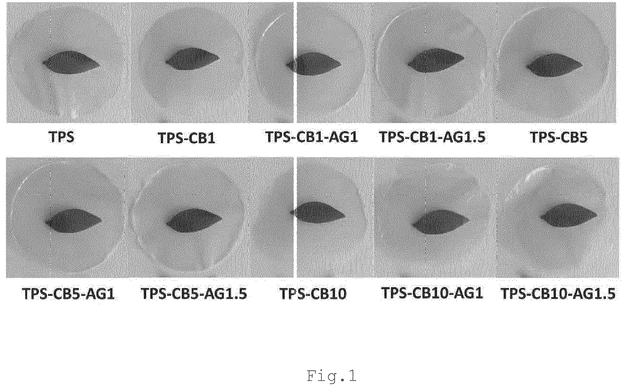

Films with a homogeneous and visually transparent macroscopic appearance were obtained (Figure 1).

### Characterization

The films were characterized in terms of their structure, morphology, thermal stability, mechanical performance, moisture absorption capacity and water solubility, optical properties and antioxidant activity. For the TPS-CB10-AG1 film, oxygen permeability and antibacterial activity against the Gram-positive bacterium *S. aureus* were also studied.

### Structure

### Infrared spectroscopy

The structure of the TPS films and the TPS-CB and TPS-CB-AG nanocomposite films, as well as their precursors (starch, CB, glycerol and gallic acid) was analyzed by Fourier transform infrared spectroscopy (FTIR) using an FTIR spectrophotometer equipped with an attenuated total reflectance (ATR) cell (Perkin-Elmer). The spectra were acquired with a resolution of 4 cm⁻¹ and 32 scans per sample, in a wavenumber range between 500 - 4000 cm⁻¹.

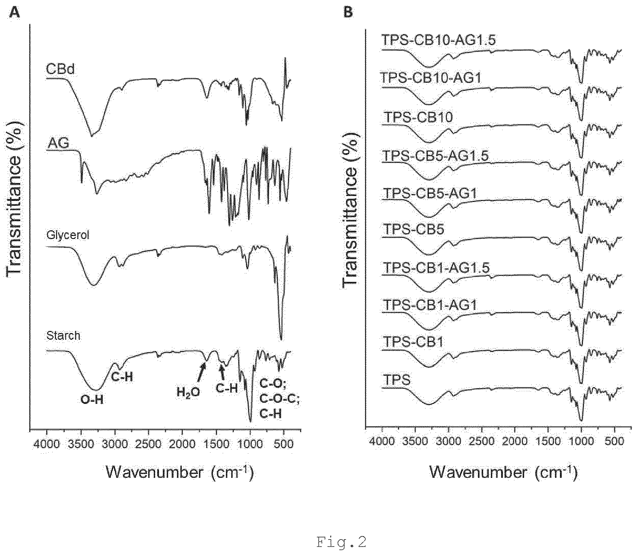

As shown in Figure 2, the spectra of the composite films are similar to the spectra of native starch and the TPS film, showing a typical polysaccharide profile, with the characteristic intense and broad band centered around 3300 cm⁻¹ which is associated with the axial deformation vibrations of the O-H groups. The bands at ~2900 cm⁻¹, 1150 cm⁻¹ and 1000-1080 cm⁻¹ are attributed to the stretching of the C-H, C-O-C and C-O functional groups, respectively. (Abdullah et al., 2018; Nguyen Vu & Lumdubwong, 2016; Santos & Spinacé, 2021). The absorption band observed at ~1650 cm⁻¹ is typically attributed to the vibration of the water molecules adsorbed on the starch and other components of the film (Nguyen Vu & Lumdubwong, 2016; Zhao & Saldaña, 2019). They also have an absorption band at ~1415 cm⁻¹, which is attributed to the presence of the C-H bonds of the CH₂OH functional groups of glycerol and the starch and cellulose chains (Abdullah et al., 2018).

Despite the similarity between the spectra, the band present in the spectrum of native starch at 996 cm⁻¹, relating to the elongation of the C-O groups, in the TPS and nanocomposites, is transformed into two bands (~996 and 1010 cm⁻¹), which may be associated with the plasticizing effect of glycerol, which results in the weakening of the intra-and intermolecular hydrogen bonds between the starch chains (Nguyen Vu & Lumdubwong, 2016). It should also be noted that some absorption bands of common functional groups are probably overlapping given the structural similarity of CB and starch. On the other hand, the low percentage of additives, namely glycerol and, in particular, AG, explains the absence of some typical bands associated with these compounds. In short, the similarity between the spectra indicates that there are no significant changes in the structure of the starch matrix, confirming the good compatibility between the matrix and the other components of the nanocomposite.

### X-ray diffraction

To complement the structural analysis of the nanocomposite films and infer their crystalline/amorphous nature, they were analyzed by X-ray diffraction (XRD) in an Empyrean X-ray diffractometer (Malvern Panalytical) operated at 45 kV and 40 mA using CuK radiation (λ = 1.541 Å) in an angular range of 5 to 50° (2*θ*) and a scanning speed of 1° min⁻¹.

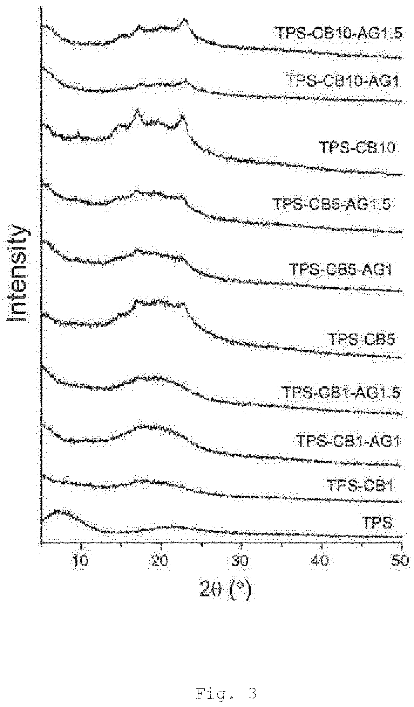

The diffraction patterns presented in Figure 3 show that the pure TPS film has an essentially amorphous nature but exhibits a peak at around 2*θ* = 7.4° that can be attributed to diffractions typical of the V-type crystal structure, suggesting that there has been some retrogradation of the TPS (Wongprayoon et al., 2018).

In composites with 1% w/w of CB nanofibers, the diffraction pattern is still very characteristic of an amorphous material. However, as the CB content increases, the peaks at around 2*θ* = 17.0° and 22.5° become more pronounced. The peak 2*θ* = 17.0° may be associated with the type B structure of TPS and the peak 2*θ* = 22.5° is attributed to the semi-crystalline structure of CB nanofibers (typical of type I cellulose). These results suggest, on the one hand, that the nanofibers favor the retrogradation of starch and, on the other, that their addition increases the crystallinity of the nanocomposite films. With the addition of AG, the intensity of the peak at 2*θ* = 17.0° decreases slightly, suggesting that this compound may be reducing the recrystallization of starch.

### Morphology

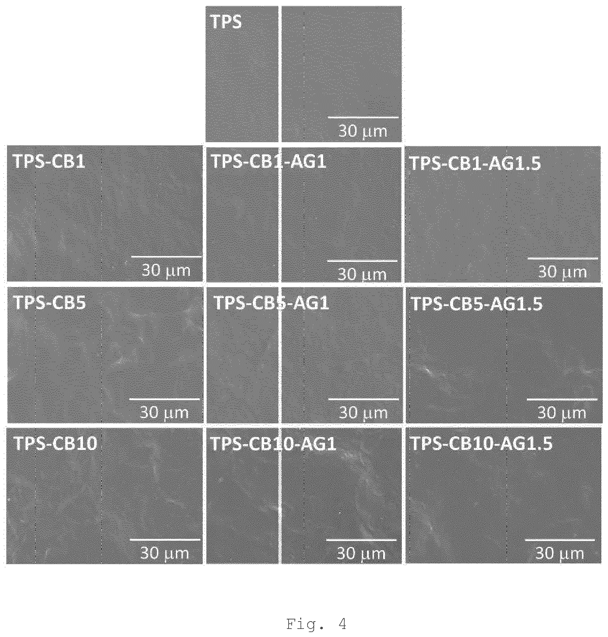

The surface morphology of all the films was studied by scanning electron microscopy (SEM) using a high-voltage microscope (HR-FESEM SU 70 Hitachi). Before image acquisition, the samples were placed on a steel support and coated with a carbon film. The micrographs (Figure 4) show that the pure TPS film has a smooth and fairly homogeneous surface. On the other hand, in the nanocomposite films, the addition of the CB nanofibers led to a slight increase in surface roughness, which intensified as the CB content increased (Figure 4). However, good dispersion of the CB nanofibers was achieved in all the nanocomposites, with no pores or cracks visible on the surface of the films and the incorporation of the nanofibers into the TPS matrix being evident. The micrographs also show that no differences are evident in the films containing AG, indicating that no AG aggregates were formed during solvent evaporation. These observations confirm the compatibility and good miscibility of the individual components of the nanocomposites, thus corroborating the results of the visual analysis of the films.

### Thermal stability

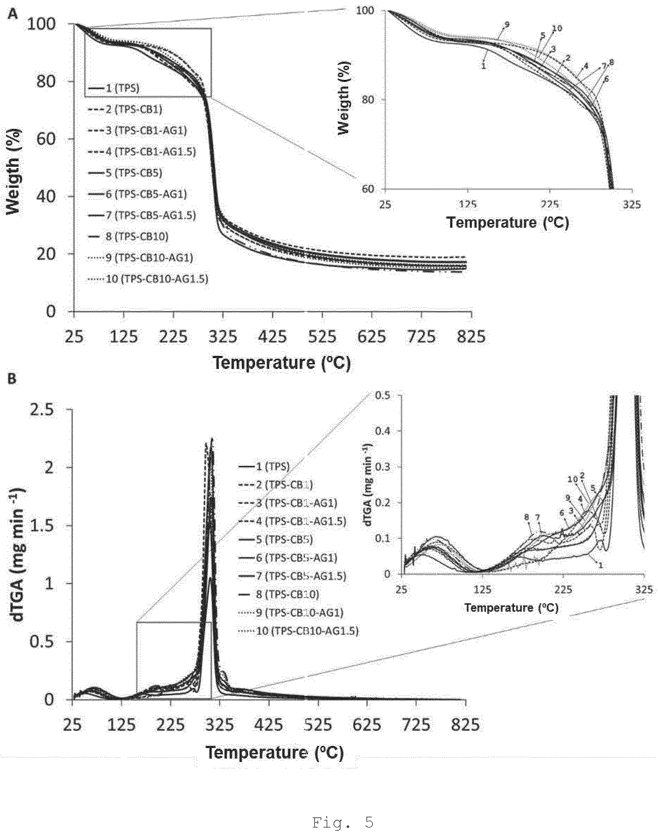

To characterize the thermal stability and obtain the degradation profile of the films developed, their thermal behavior was evaluated by thermogravimetric analysis in a Hitachi STA300 device equipped with a platinum cell. The samples were heated from room temperature to 800 °C in an inert atmosphere (N₂). The thermograms and their first derivative (DTG) are shown in Figure 5.

The thermograms and their first derivative (DTG) are shown in Figure 5.

All the films have a similar thermal behavior, with three distinct stages of weight loss. The first stage (< 120 °C), with a reduced weight loss, is associated with the volatilization of the water molecules in the nanocomposites. The second stage (125-240 °C) is attributed to the decomposition of glycerol, in agreement with results described for starch-based films plasticized with glycerol (Menzel et al., 2019; Rodrigues et al., 2021). In addition, the degradation of the AG should also occur in this zone, at a temperature of around 224 °C (Chen et al., 2020). The third stage, which involves the greatest loss of weight, has maximum decomposition temperatures of between 300-310 °C (TPS: 306 °C; TPS-CB1: 306 °C; TPS-CB1-AG1: 306 °C; TPS -CB1-AG1. 5: 300 °C; TPS-CB5: 309 °C; TPS-CB5-AG1: 308 °C; TPS-CB5-AG1.5: 309 °C; TPS-CB10: 310 °C; TPS -CB10-AG1: 306 °C; TPS-CB10-AG1.5: 308 °C), associated with the degradation of starch (the main component of the films) and CB. The results suggest that these CB and AG contents do not significantly influence the maximum decomposition temperature of the starch films. Above 400 °C, the remaining weight of the films carbonizes, resulting in a final residue of between 16-19%. Thus, the results indicate that all the nanocomposites developed are stable up to 125 °C, which is still above the temperatures of pasteurization (<100 °C) or steam sterilization (110-121 °C), which are thermal treatments usually applied by some industries to eliminate pathogenic microorganisms from packaged products (Chiozzi et al., 2022; Jildeh et al., 2021).

### Mechanical performance

The fragility of starch films is one of the limitations that hinders their application in the packaging sector. To check whether the nanocomposites developed have better mechanical performance than pure thermoplastic starch, their mechanical properties were evaluated by tensile tests carried out on an Instron 5966 uniaxial testing machine (Instron Corporation) in the traction mode at a speed of 10 mm min⁻¹ using a 500 N static load cell. All measurements were carried out on at least five replicates using rectangular specimens (5 x 1 cm²) with a reference length of 3 cm. Young's modulus, tensile strength and elongation at break were determined from the stress (MPa) and strain (%) curves using Instron BlueHill 3 software.

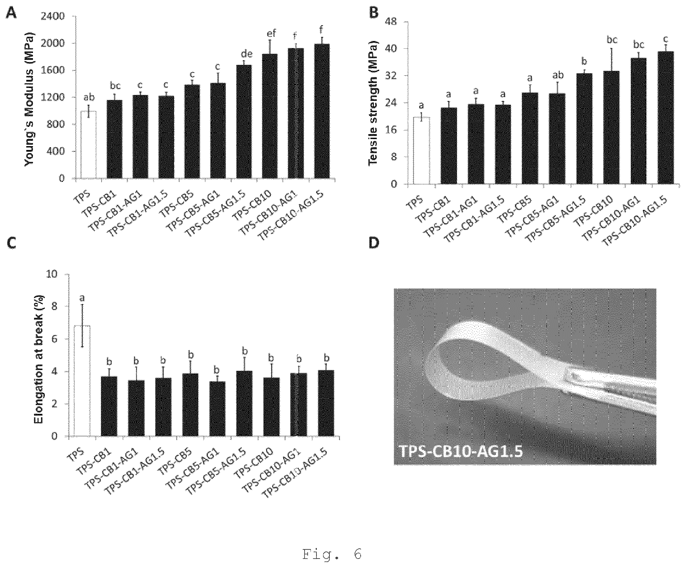

The results of the tensile tests (Figure 6) showed that incorporating CB nanofibers into the TPS matrix resulted in stronger films, with a clear increase in Young's modulus (YM) and tensile strength (TS) as the nanofiber content increased. This result, on the one hand, reflects the compatibility between the plasticized starch matrix and CB, anticipated by the aforementioned structural similarity of the two polysaccharides and already evidenced in the SEM micrographs, which results in molecular interactions between the two. But above all, the results highlight the character of semi-crystalline CB nanofibers as a reinforcing agent for TPS, as intended. Although reinforcement with CB seems to be the main factor contributing to the increased strength of the nanocomposites, the incorporation of AG also resulted in slight increases in YM and TS, especially for the nanocomposites with 5 and 10% w/w of CB nanofibers, probably due to the formation of intermolecular hydrogen bonds between the -OH groups of AG and CB and starch, which will contribute to a more cohesive structure (Mangmee & Homthawornchoo, 2016; Zhao & Saldaña, 2019). Specifically, the YM values of the nanocomposite films vary between 1.2 - 2.0 GPa (vs. 1.0 GPa for TPS) and TS between 23 - 39 MPa (vs. 20 MPa for TPS), with the film containing 10% w/w CB and 1.5% w/w AG (TPS-CB10-AG1.5) being the nanocomposite with the highest values.

Notably, the YM and TS values obtained for these nanocomposites are also in the range of those reported for synthetic polymers commonly used in flexible packaging, such as EVOH (YM: 2.1 - 2.6 GPa; TS: 59 - 77 MPa) or low-density polyethylene (LDPE) (YM: 0.2-0.5 GPa; TS: 8-31 MPa) (Luzi et al., 2019; Mangaraj et al., 2009).

As expected, this increase in mechanical strength was accompanied by a significant reduction in elongation at break in nanocomposites with CB and with CB and AG (values in the range of 3.4 - 4.1%) when compared to TPS-only films (6.8 ± 1.3%). However, among the nanocomposites, these variations are not significant, regardless of the CB and AG contents. Nevertheless, and despite the reduction in elongation at break of the TPS-CB-AG films, it should be noted that, from a mechanical point of view, these composite films, regardless of the CB and AG content, remain flexible enough to be handled, as illustrated in Figure 6D.

### Water-resistant properties

### Moisture absorption

Due to the hygroscopic nature of TPS, one of the challenges of its application as a packaging material is to improve its resistance to ambient humidity in order to preserve its physical and barrier properties. To this end, the effect of adding CB nanofibers and AG on the absorption of ambient humidity by TPS films and their nanocomposites was evaluated. Dry samples of each film, measuring 2x2 cm², were placed in a desiccator at room temperature with a relative humidity of ca. 75% using a saturated aqueous solution of sodium chloride. Moisture absorption was calculated after 2 h, 6 h, 24 h and 72 h using the expression: Moisture absorption (%) = (W_{w} - W₀) x W₀⁻¹ x 100%, where W₀ is the initial weight of the sample and W_{w} is the weight of the sample at each analysis point.

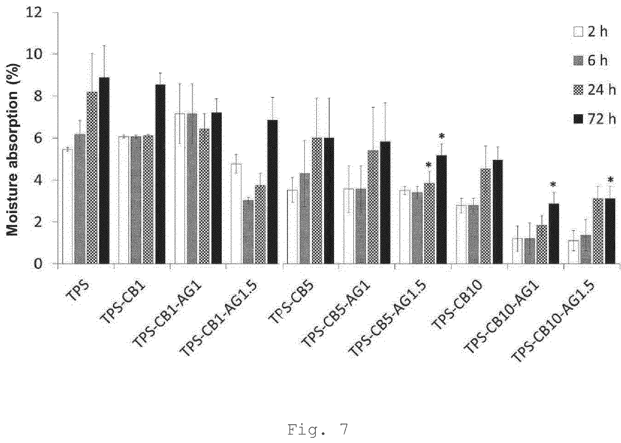

The results (Figure 7) show that although all the films absorbed moisture over time, the addition of CB nanofibers and AG had a positive effect on this property. For the same period of time, as the CB content increases, there is a clear downward trend in the moisture absorption of the nanocomposites. At 72 h, compared to pure TPS, the films with 10% w/w of CB and 10% w/w of CB and AG (1.0 and 1.5% w/w) absorbed significantly less (p < 0.05) atmospheric humidity. Specifically, while in the pure TPS film the moisture absorption reached 8.9 ± 1.5%, in the TPS-CB10-AG films, this value is reduced to 4.9 ± 0.6% in TPS-CB10, 2.9 ± 0.5% in TPS-CB10-AG1 and 3.1 ± 0.6% in TPS-CB10-AG1.5, suggesting that they have greater resistance to atmospheric moisture. This reduction in moisture absorption by the TPS-CB10-AG nanocomposites, when compared to the TPS film, is probably due mainly to the presence of the CB nanofibers which, despite being hydrophilic, are semi-crystalline in nature. On the other hand, as mentioned above, the similarity between CB and starch results in good interfacial adhesion as evidenced by the SEM images, which results in a reduction in the diffusion of water molecules through the films. From these results, it is also clear that the AG had a significant effect on reducing moisture absorption by the TPS-CB-AG nanocomposites. Thus, these results highlight the importance of adding not only CB nanofibers as reinforcement, but also AG to the plasticized starch matrix, to obtain nanocomposites with better resistance to atmospheric humidity.

### Solubility in water

Solubility in water is another relevant characteristic that can give an additional indication of the water-resistant properties of the films developed. Therefore, all the films were tested to determine their solubility in water. Samples (2x2 cm²) of the films were dried (60 °C, 4 h), weighed (W₀) and immersed in 25 mL of distilled water for 24 h at room temperature. After this period, the film was recovered, placed on filter paper, dried (105 °C, 24 h) and weighed (W_{f}). Solubility was calculated by determining the percentage of film weight dissolved according to the equation: Solubility (%) = (W₀ - W_{f}) × W₀⁻¹ × 100.

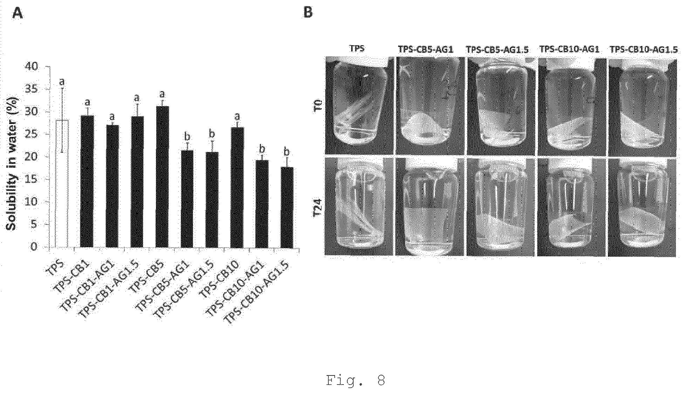

According to the results shown in Figure 8A, it was found that, compared to TPS, there was only a significant reduction (p < 0.05) in the solubility in water of films with 5 or 10% w/w of CB and AG (1 and 1.5% w/w). In the TPS films there was a solubility of around 28.2 ± 7.1%, attributed to the dissolution of the macromolecular fractions of starch and glycerol, which is in line with values reported in the literature for TPS films (Hu et al., 2009). In the TPS-CB nanocomposites, solubility is similar (p > 0.05) to that of the TPS film, with values of 29.1 ± 1.7% for TPS-CB1, 31.3 ± 1.3% for TPS-CB5 and 26.7 ± 1.3% for TPS-CB10, indicating that the same fraction of starch and glycerol will be dissolved. On the other hand, in the TPS-CB-AG nanocomposite films, a significant reduction in solubility values was observed in the films with 5 and 10% w/w CB. Specifically, 21.6 ± 1.6% and 21.2 ± 2.5% for TPS-CB5-AG1 and TPS-CB5-AG1.5, respectively, and 19.4 ± 1.2% for TPS-CB10-AG1 and 18.0 ± 2.1% for TPS-CB10-AG1.5. These results are in line with those obtained in the moisture absorption test and reinforce the importance of AG in increasing the water resistance of these nanocomposite films. Figure 8B shows the visual appearance of the films before and after 24 hours of immersion in water. The change in the visual appearance of the TPS films immediately after immersion in water is evident, as is the resistance of the films with CB and AG after 24 hours, even in the films with 5% w/w of CB nanofibers, showing the importance of adding CB and AG to increase their stability in water.

### Optical properties

In the area of packaging, transparency and barrier properties to UV radiation can be especially relevant. Transparency is important as a good view of the product can interfere with consumer acceptance. On the other hand, a high barrier to UV radiation can prevent the degradation of photosensitive food products, induced by photochemical reactions. To evaluate the optical properties of the prepared films, transmittance spectra were acquired in the UV-vis region using a Multiskan Go spectrophotometer (Thermo Fischer Scientific). The spectra of the films (40 × 10 mm²) were acquired at room temperature in the wavelength range 200-800 nm. The opacity values of each film were also determined using the equation: A600 x b⁻¹ where A₆₀₀ is the absorbance at 600 nm and b is the thickness of the films in mm.

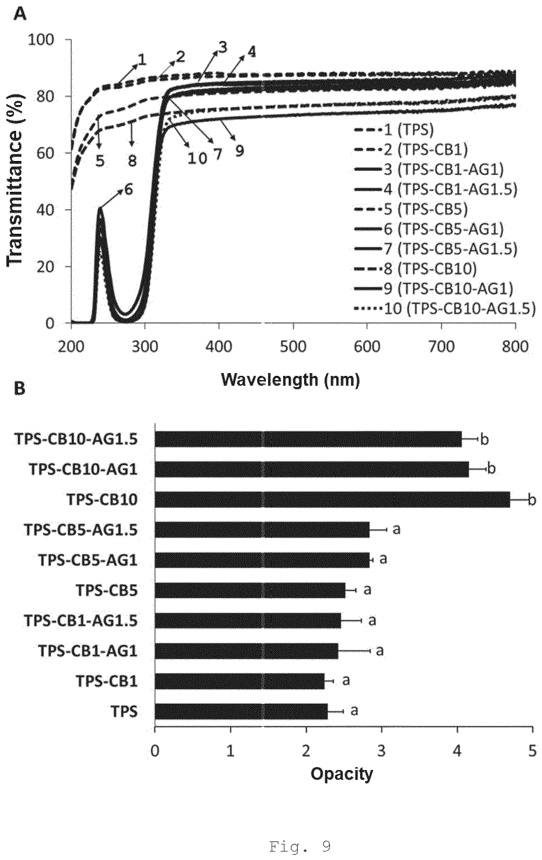

The transmittance spectra (Figure 9A) show that all the films are optically transparent in the visible region (400 - 800 nm), with a transmittance between 77 - 89%, which is in line with their visual appearance (Figure 1). However, there is a slight decrease in transmittance as the content of CB nanofibers in the films increases. However, even in the nanocomposite with 10% (w/w) CB, the reduction in transmittance is only ca. 10% compared to TPS. This effect of CB nanofibers on the transparency of starch films has already been observed and may be related to a greater amount of light reflected and scattered by the films due to the presence of the nanofibers (Abral et al., 2021).

Regarding opacity, the results (Figure 9B) agree with those of transmittance, confirming that the transparency of the films decreases as the CB content increases. While the pure TPS film has an opacity of 2.18, the nanocomposite films show values between 2.24 (TPS-CB1) and 4.69 (TPS-CB10), with the films containing 10% w/w of nanofibers being the only ones with a significantly different opacity (p < 0.05) from the rest, but this does not affect their transparency (Figure 1). On the other hand, the incorporation of AG does not seem to have a considerable influence on the opacity of the films, since, although small variations are observed, they are not significant. It should be noted that the opacity values of the TPS-CB10-AG films are of the same order of magnitude as those reported for LDPE (3.05 A600 mm⁻¹), which is classified as a transparent plastic and is widely used in flexible packaging (Shiku et al., 2003).

As for the transmittance of the films in the UV region, the respective spectra (Figure 9A) revealed that while the TPS and TPS-CB films have a transmittance between 48 - 87%, the films with AG have a considerably lower transmittance, with values between 0 - 60% in the 200 - 315 nm range, indicating that these films have barrier properties to UV radiation, particularly in the UV-C (200 - 280 nm) and UV-B (280 - 315 nm) regions. As mentioned above, UV radiation can catalyze various chemical reactions which, with long-term exposure, can lead to organoleptic changes (e.g. color and taste) as well as lipid oxidation of oxidation-sensitive substances which in turn can also lead to organoleptic changes. Therefore, the incorporation of AG into TPS-CB films opens up the possibility of using these active films as UV-absorbing films with the ability to prevent the degradation of photosensitive food products, which may be more attractive to the consumer when packaged in a transparent wrapper.

### Antioxidant activity in chemico

The preservation of products susceptible to oxidative degradation can be avoided with the addition of antioxidant compounds. In this context, the incorporation of antioxidants into the packaging material has been considered a more advantageous approach than the direct addition of these compounds.

The antioxidant activity of the TPS-CB-AG nanocomposite films was estimated using the free radical method 2,2-diphenyl-1-picrylhydrazyl, DPPH* following a procedure described previously (Moreirinha et al., 2020) with minor modifications. Samples of each film measuring 1 x 1 cm² were placed in 4.0 mL of an ethanol/water solution (50:50) to which 250 mL of a 1 mM DPPH* solution was added. The reaction mixture was incubated for 2 hours at room temperature, protected from light and stirred. After 2 hours, the absorbance was read at 517 nm in a UV-vis spectrophotometer. The DPPH* radical scavenging activity was calculated from the absorbance of each sample (A_{Asample}) in relation to the control (ethanol/water solution with DPPH* but no film) (A_{DPPH}), according to the expression: DPPH* scavenging activity (%) = (A_{DPPH} - A_{Asample}) × A_{DPPH}⁻¹ x 100. For comparison, the antioxidant activity of the TPS and TPS-CB films was also determined.

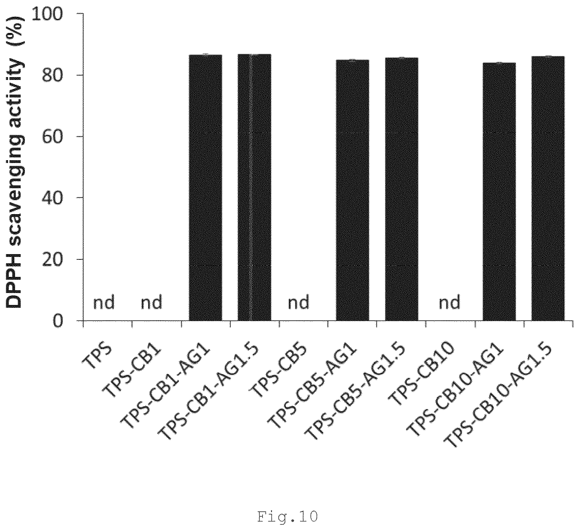

The results (Figure 10) show that, as expected, no antioxidant activity was detected in the films without AG (TPS and TPS-CB). On the contrary, all the TPS-CB-AG films, regardless of the AG concentration, showed antioxidant activity of around 85%, which confirms that this compound gives TPS the ability to capture free radicals, thus reinforcing the potential of the films developed for application in active packaging for preserving products susceptible to oxidative degradation.

### Oxygen permeability

The oxygen permeability rate is considered one of the most relevant properties in the development of a packaging material. Oxygen is responsible for causing lipid oxidation, vitamin degradation and by facilitating the development of aerobic microorganisms (Michiels et al., 2017). Therefore, for certain products (e.g. food) it is essential that the packaging material has a low oxygen permeability rate in order to maximize its shelf life and guarantee the preservation of its properties and safety for the consumer.

To this end, the oxygen permeability coefficient of the TPS film and the TPS-CB10 and TPS-CB10-AG1 nanocomposite films was determined. The TPS-CB10-AG1 film was selected for this evaluation taking into account the characterization results (opacity, mechanical strength, thermal stability and water resistance), in which the films with 10% w/w of CB nanofibres were shown to have superior properties in terms of mechanical strength and water resistance and an opacity and thermal stability suitable for the intended application. In addition, it was found that all the nanocomposites with AG had similar antioxidant activity, which is why the nanocomposite with 10% w/w CB nanofibers and a lower amount of AG was selected, considering an increase in scale and the cost benefit of the final material. The test was carried out in accordance with ISO 15105-2:2003 on LabThink PERME^{®}OX2/230 equipment at 23.0 °C ± 0.5 °C and an RH of 50 ± 5%. The samples were previously conditioned for 24 hours under the same conditions (temperature and RH) as the test. The results are shown in Table 2.

**Table 2. Oxygen permeability coefficient (23 °C and 50% RH) of TPS, TPS-CB10 and TPS-CB10-AG1 films.**

| Film | Oxygen Permeability Coefficient (cm³µm m⁻² d⁻¹ kPa⁻¹) |
|---|---|
| TPS | 8.00 ± 3.00 |
| TPS-CB10 | 1.00 ± 0.00 |
| TPS-CB10-AG1 | 0.91 ± 0.12 |

The results clearly show that, with the addition of the CB nanofibers, the oxygen permeability of the nanocomposite films was considerably reduced (~8 times) when compared to the permeability of the pure TPS film. It should also be noted that the oxygen permeability coefficient of the TPS-CB10-AG1 film (0.91 cm³µm m⁻² d⁻¹ kPa⁻¹) is considerably lower than the values described for LDPE, one of the most widely used synthetic polymers in flexible packaging (2.72 - 3.60 cm3µm m-2 d-1 kPa-1) (Mangaraj et al., 2009), and is therefore superior in terms of oxygen barrier. And comparing the oxygen permeability of the TPS-CB10-AG1 film with the values reported for EVOH (0.08 - 0.31 cm³µm m⁻² d⁻¹ kPa⁻¹, 23 °C and 65% RH) (Maes et al., 2018), the two materials have values that are close to each other. The results therefore indicate that a good oxygen barrier has been achieved for the TPS-CB10-AG1 composite, whose values will be technically and commercially suitable for application in packaging.

### In vitro antibacterial activity

Some products (e.g. food) are susceptible to microbial contamination by pathogenic bacteria, which can cause them to deteriorate and compromise consumer safety. In this field, the incorporation of antimicrobial agents into packaging material has been a successful strategy for preserving the quality and extending the shelf life of products. Therefore, it was evaluated the antibacterial activity of the TPS-CB10-AG1 nanocomposite against the Gram-positive bacterium S. *aureus,* a pathogenic bacterium recognized as being responsible for the deterioration of products containing moisture. The TPS-CB10-AG1 film was selected for this evaluation for the reasons mentioned above for the oxygen permeability test.

Samples (3 cm²) of the TPS, TPS-CB10 and TPS-CB10-AG1 films, previously sterilized by UV radiation (20 min on each side), were incubated with the bacteria *S*. *aureus* methicillin-resistant (MRSA) DSM 25693 (Bartolomeu et al., 2016), (10⁵ colony-forming units (CFU) mL⁻¹) in PBS pH 7.4 at 25 °C for 48 hours. The concentration of the bacteria (log CFU mL⁻¹) was determined at 24 and 48 h by the plate count method in tryptone soy agar (TSA) culture medium after incubation at 37 °C for 18 - 24 h. The TPS and TPS-CB10 films were also included in the test as a control. In addition, a control (CTRL) was carried out consisting of the bacteria inoculated in PBS without a film sample.

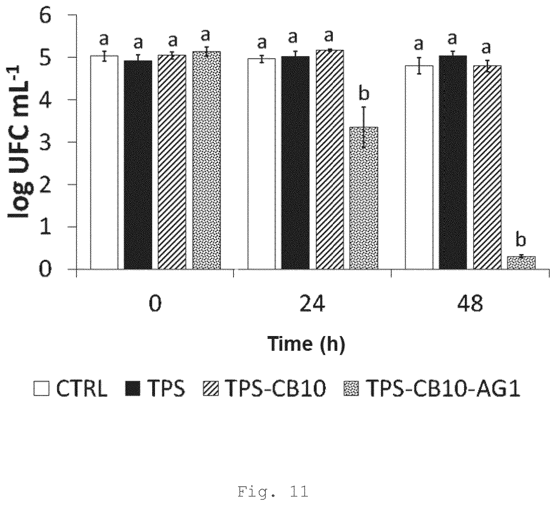

The results shown in Figure 11 confirmed that in the presence of the films without GA (TPS and TPS-CB10) there was no reduction in the bacterial concentration over 48 h, with a profile identical to that observed for the bacterial control. On the other hand, in the presence of the AG-enriched TPS-CB10-AG1 film, there was a significant decrease in the initial bacterial concentration of ~1.6-log UFC mL⁻¹ after 24 h and ~4.5-log UFC mL⁻¹ after 48 h, indicating that after this incubation time, and since there was a reduction of more than 3-log UFC mL⁻¹, the film has a bactericidal effect against the *S. aureus* MRSA DSM 256 bacterium. aureus MRSA DSM 25693, according to the classification of the American Society for Microbiology (Pankey & Sabath, 2004). According to the literature, the mechanism of action of AG is associated with hyperacidification of the cytoplasm due to the diffusion of AG across the cell membrane. This intracellular acidification can alter the membrane potential and make it more permeable, causing irreversible changes (e.g. charge, hydrophobicity, K+ release) that will lead to cell death (Borges et al., 2013).

This is the first time that AG has been incorporated into TPS-CB nanocomposites and its antibacterial activity has been demonstrated both in association with TPS alone and in the TPS-CB nanocomposite. And with the relevance of the strain investigated being methicillin-resistant. The results thus emphasize the innovative nature of the films developed and reinforce their potential for application in active packaging.

A summary of the properties of the TPS-CB10-AG1 film is shown in Table 3. For comparison and as an example, some properties mentioned in the literature are also presented for 2 commercial synthetic polymers, EVOH and LDPE, used in the flexible packaging sector.

**Table 3. Summary of the properties of TPS film with 10% CB and enriched with 1% AG (TPS-CB10-AG1). The properties (mechanical, thermal, oxygen permeability) of 2 commercial synthetic polymers (EVOH and LDPE), used in flexible packaging, are also presented (taken from (Aragón-Gutiérrez et al., 2021; Jana et al., 2003; Luzi et al., 2019; Maes et al., 2018; Mangaraj et al., 2009).**

| Property | | TPS-CB10-AG1 | EVOH | LDPE |
|---|---|---|---|---|
| Mechanicals | | | | |
| | Tensile strength (Mpa) | 37 ± 2 | 59 - 77 | 8 - 31 |
| | Young Modulus (GPa) | 1.9 ± 0.1 | 2.1 - 2.6 | 0.2 - 0.5 |
| | Elongation at break (%) | 3.9 ± 0.4 | 230 - 380 | 100 - 965 |
| Thermal stability | | 125 °C | 348 °C | 305 °C |
| Water resistance | | 2.9 ± 0.5% | nd | nd |
| Moisture absorption after 72 h at 75% RH, RT | | | | |
| Solubility in water (24 h) | | 19.4 ± 1.2% | nd | nd |
| Optical (UV-vis) | | 4.15 | nd | 3.05 |
| Opacity (A₆₀₀ mm⁻¹) | | Yes | na | na |
| Anti-UV barrier properties | | | | |
| In-chemical antioxidant activity (DPPH* radical scavenging activity) | | Yes | na | na |
| Oxygen permeability (cm³ mm m⁻² d⁻¹kPa⁻¹) | | 0.91 (23 °C. 50% HR) | 0.08 - 0.31 (23 °C. 65%HR) | 2.74 - 3.60 (25 °C) |
| Antibacterial activity (S. *aureus)* | | Yes | na | na |

| | | | | |
|---|---|---|---|---|
| nd: not available; na: not applicable | | | | |

## Claims

1. Bioactive nanocomposite film comprising thermoplastic starch, 1% to 20% by weight of bacterial cellulose in relation to the weight of the starch and 0.25 to 5% by weight of gallic acid in relation to the weight of the starch, wherein at least one of the components has nanometric dimensions of < 100 nm

2. Bioactive nanocomposite film according to the preceding claim, comprising thermoplastic starch, 1% to 10% by weight of bacterial cellulose in relation to the weight of the starch and 1 to 1.5% by weight of gallic acid in relation to the weight of the starch.

3. Bioactive nanocomposite film according to any of the preceding claims, comprising thermoplastic starch, 10% by weight of bacterial cellulose in relation to the weight of the starch and 1% by weight of gallic acid in relation to the weight of the starch.

4. Bioactive nanocomposite film according to any of the claims 1 and 2, comprising thermoplastic starch, 10% by weight of bacterial cellulose in relation to the weight of the starch and 1.5% by weight of gallic acid in relation to the weight of the starch.

5. Use of a bioactive nanocomposite film according to any of the claims 1 to 4 in the production of packaging.

6. Use according to the previous claim, wherein it is used in the production of food packaging.

7. Packaging comprising the bioactive nanocomposite film as claimed in any of the claims 1 to 4.

## Patentansprüche

1. Bioaktiver Nanokompositfilm, umfassend thermoplastische Stärke, 1 % bis 20 Gew.-% bakterielle Cellulose bezogen auf das Gewicht der Stärke und 0,25 % bis 5 Gew.-% Gallussäure bezogen auf das Gewicht der Stärke, wobei mindestens eine der Komponenten nanometrische Abmessungen von < 100 nm aufweist.

2. Bioaktiver Nanokompositfilm nach dem vorhergehenden Anspruch, umfassend thermoplastische Stärke, 1 % bis 10 Gew.-% bakterielle Cellulose bezogen auf das Gewicht der Stärke und 1 % bis 1,5 Gew.-% Gallussäure bezogen auf das Gewicht der Stärke.

3. Bioaktiver Nanokompositfilm nach einem der vorhergehenden Ansprüche, umfassend thermoplastische Stärke, 10 Gew.-% bakterielle Cellulose bezogen auf das Gewicht der Stärke und 1 Gew.-% Gallussäure bezogen auf das Gewicht der Stärke.

4. Bioaktiver Nanokompositfilm nach einem der Ansprüche 1 und 2, umfassend thermoplastische Stärke, 10 Gew.-% bakterielle Cellulose bezogen auf das Gewicht der Stärke und 1,5 Gew.-% Gallussäure bezogen auf das Gewicht der Stärke.

5. Verwendung eines bioaktiven Nanokompositfilms nach einem der Ansprüche 1 bis 4 zur Herstellung von Verpackungen.

6. Verwendung nach dem vorhergehenden Anspruch, wobei diese bei der Herstellung von Lebensmittelverpackungen eingesetzt wird.

7. Verpackung, umfassend den bioaktiven Nanokompositfilm nach einem der Ansprüche 1 bis 4.

## Revendications

1. Film nanocomposite bioactif comprenant de l'amidon thermoplastique, de 1 % à 20 % en poids de cellulose bactérienne par rapport au poids de l'amidon et de 0,25 % à 5 % en poids d'acide gallique par rapport au poids de l'amidon, dans lequel au moins l'un des composants présente des dimensions nanométriques de < 100 nm.

2. Film nanocomposite bioactif selon la revendication précédente, comprenant de l'amidon thermoplastique, de 1 % à 10 % en poids de cellulose bactérienne par rapport au poids de l'amidon et de 1 % à 1,5 % en poids d'acide gallique par rapport au poids de l'amidon.

3. Film nanocomposite bioactif selon l'une quelconque des revendications précédentes, comprenant de l'amidon thermoplastique, 10 % en poids de cellulose bactérienne par rapport au poids de l'amidon et 1 % en poids d'acide gallique par rapport au poids de l'amidon.

4. Film nanocomposite bioactif selon l'une quelconque des revendications 1 et 2, comprenant de l'amidon thermoplastique, 10 % en poids de cellulose bactérienne par rapport au poids de l'amidon et 1,5 % en poids d'acide gallique par rapport au poids de l'amidon.

5. Utilisation d'un film nanocomposite bioactif selon l'une quelconque des revendications 1 à 4 dans la production d'emballages.

6. Utilisation selon la revendication précédente, dans laquelle il est utilisé dans la production d'emballages alimentaires.

7. Emballage comprenant le film nanocomposite bioactif selon l'une quelconque des revendications 1 à 4.
